# EUROPEAN PATENT SPECIFICATION

(11) **EP 0 631 933 B1**
(45) Date of publication and mention of the grant of the patent: **17.09.1997**
(21) Application number: 94109005.2
(22) Date of filing: 13.06.1994
(51) Int. Cl.: B65B 35/08, B65B 37/12, B65G 47/14

(54) **Method and apparatus for picking up items from a containment volume, for example for filling containers.**
Verfahren und Vorrichtung zum Aufnehmen von Gegenständen aus einem Sammelraum, z.B. zum Füllen von Behältern.
Procédé et dispositif pour recueillir des objets d'un volume de récolte, par ex. pour remplir des récipients.

(30) Priority: 29.06.1993 IT TO930468
(43) Date of publication of application: 04.01.1995
(73) Proprietor: Ferrero S.p.A., I-12051 Alba (Cuneo) (IT)
(72) Inventor: Cognigni, Silvano, I-62018 Potenza Picena (Macerata) (IT)
(74) Representative: Bosotti, Luciano

(56) References cited:
- FR-A- 2 571 348
- US-A- 2 291 930
- US-A- 3 209 888
- US-A- 3 285 387
- US-A- 3 352 455
- US-A- 4 697 721

## Description

The present invention relates to an apparatus and a method for picking up items, preferably automatically, from a containment volume according to the pre-characterising portions of Claims 1 and 14, which are known, e.g. from US-A-4 697 721 or US-A-3 285 387. The invention was developed with particular attention to its possible use in the automatic packaging of containers for small toys intended to be inserted as surprises into food products or the like.

In this field of application, an arrangement has been known for many years whereby the surprises are put into a container commonly known as a "little barrel", made up of two cup-like bodies which can be fitted together by engagement of their open ends.

Very often, the surprise is of a type requiring assembly and a sheet of assembly instructions and/or transfers for applying to the surprise must be put into the container as well as the component parts: usually this sheet or sheets are rolled into a tube for insertion in one of the cup-like bodies, in contact with its inner surface.

In view of the high production rate of the products in which the container must be inserted (especially in the case of confectionery manufactured on an industrial scale), and considering the need to keep the cost of the surprise as low as possible, it is definitely desirable to be able to fill and assemble the container automatically, especially as far as the following operations are concerned:
- picking up the component parts of the surprise in order to put them into the container,
- inserting the parts into the container (usually into one of its cup-like constituents), together with the sheet or sheets carrying the assembly instructions and/or decorative transfers, and
- assembling the container by coupling of its two constituent cup-like bodies.

Until now, it has been practically impossible to carry out the operations described above entirely automatically. In order to ensure that the finished product was reliable (especially to ensure that the container contains all parts of the surprise, that the sheet or sheets are inserted and that the container is securely closed), manufacturers were therefore obliged to resort to manual packaging which involved considerable problems of organization, cost and, above all, hygiene of the finished product.

The object of the present invention is to provide a solution to the first of the above problems in particular (picking up the component parts of the surprise), the other problems being solved by arrangements which are the subject of EP-A-0 631 932 and EP-A-0 631 934.

The problem described above is solved by the present invention thanks to an apparatus having the further characteristics specified in Claim 1. The invention also relates to the related method as called for in Claim 14.

The invention will now be described, purely by way of non-limitative example, with reference to the appended drawings, in which:
- Figure 1 is an overall perspective view of an apparatus according to the invention,
- Figure 2 is a section taken on the line II-II of Figure 1,
- Figure 3 is a view from above of the apparatus of Figure 1, seen from an observation point corresponding approximately to the arrow III of Figure 1, and
- Figures 4, 5 and 6 are three other views which substantially correspond to the view of Figure 2 and show subsequent operating positions of the apparatus of the invention.

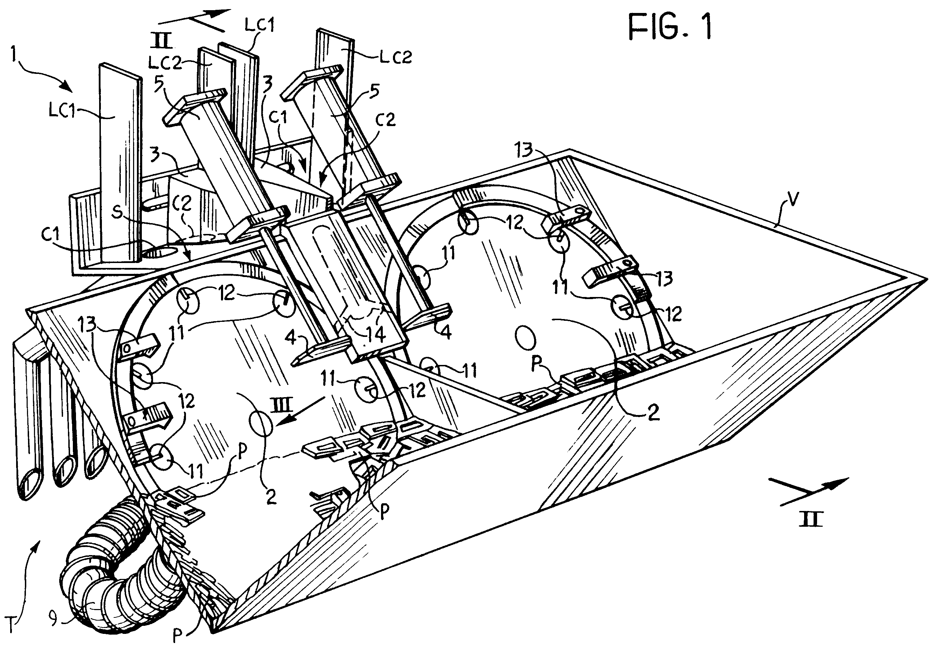

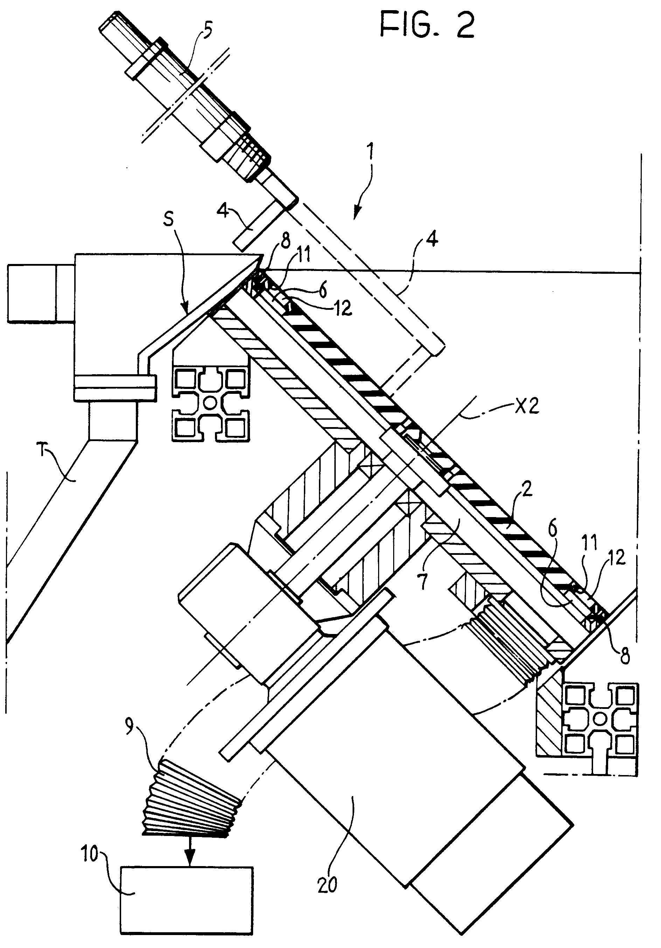

The apparatus according to the invention, generally indicated 1, is intended to pick up items P contained in a vessel V (containment volume) and carry them singly (that is one item P at a time) towards input openings, constituted, in the embodiment illustrated by way of example, by the upper open ends of two ducts C1, C2 through which the products P are allowed to fall freely towards a filling station (not illustrated except for part of the fall ducts T which are partly visible in Figures 1 and 2).

Later in this description, the items P will be explicitly referred to as small articles in moulded plastic such as, for example, parts of a toy ("surprise") to be assembled. However the scope of the invention is entirely general: it covers the solution of the problem of picking up items of any nature such as, for example, small mechanical parts, small metal items and the like, from a containment vessel V to transfer them towards a processing station which is generally at least slightly higher than the vessel V.

As far as loading the items P into the vessel V is concerned, it is possible to use any prior art method: periodical manual loading by an employee, automatic loading by a conveyor (possibly with the items being carried along by an airflow or the like). In any case, the method of filling the vessel V is not in itself relevant to the enactment of the present invention. Furthermore, it should be noted that in the arrangement illustrated in Figure 1 (the embodiment which is currently preferred) the apparatus according to the invention includes two twin pick-up stations, projecting into a single vessel V in an overall mirror-image arrangement for feeding items P to two pairs of drop-feed ducts C1, C2.

In the following of the present description, the structure and the operation of one only of the above stations will be examined in detail (with explicit reference to Figures 2 to 6): it being naturally understood that, as a result of the overall symmetry described above, what is said for one station applies equally to the other.

The main element of the apparatus 1 according to the invention is a rotatable body 2 (a disc in the embodiment which is currently preferred) inclined as a whole (for example with its axis of rotation X2 inclined to the vertical at an angle, for example, of 45°) in such a way that its lower portion (more precisely, the portion of its periphery which at any one time is in the lowest position as a result of rotation about the axis X2) is "diving" or "fishing" into the items P inside the vessel V.

The upper portion of the disc 2 (that is, more correctly, the peripheral portion of the disc 2 that at any one instant is uppermost) is in a position generally facing (it does not need to be strictly adjacent) the input openings C1, C2 between which a selector element 3 operates (see in particular Figures 1 and 5) to direct each item P picked up from the vessel V towards either the opening C1 or the opening C2 according to requirements.

The disc 2 is rotatable about the axis X2 under the action of a motor 20 which is controlled, along with the selector 3 and a pick-up paddle or rake 4 by a central operating control unit for the apparatus which may be constituted, for example, by a so-called programmable logic controller or PLC. All the above follows prior art control criteria which do not need to be explained here as they are not relevant to the invention.

It is sufficient to point out that the motor that drives the rotation of the disc 2 round the axis X2 is usually an electric motor, while the selector 3 and the rake 4 may be operated by pneumatic or hydraulic systems, as in the case of the actuator 5 visible in Figure 1 which drives the rake 4.

Round the periphery of the disc 2, a plurality of holes 6 (Figure 2) open towards a cup-like cavity 7, the opening of which is occupied by the disc 2 with an O-ring 8 around its periphery. This allows the disc 2 to rotate about the axis X2 while ensuring, at the same time, that the suction chamber defined by the cavity 7 is substantially airtight. Into this chamber a duct 9 opens which leads from a vacuum source (sub atmospheric pressure) such as a vacuum pump or a simple industrial suction unit 10.

It follows that, as a result of activating the source 10, low pressure propagates through the duct 9 to the chamber 7 and, from here, as a result of the sealing action of the O-ring 8, to the holes 6. In these holes, interchangeable elements are mounted on the disc 2, constituted, in the embodiment illustrated, by stoppers 11 (made for example of a flexible material such as plastic or rubber) fitted into the holes 6 and having in turn, in the upper surface of the disc and substantially aligned therewith, one or more apertures 12, represented in the appended drawings by rectilinear slits 12 extending radially relative to the disc 2.

Activation of the source 10 causes an airflow through the apertures 12 from outside to inside of the disc 2.

Under the effect of this suction, an attractive force develops in correspondence with the portion of the disc 2 which is immersed in the items P in the vessel V, and tends to draw the items P towards the apertures 12.

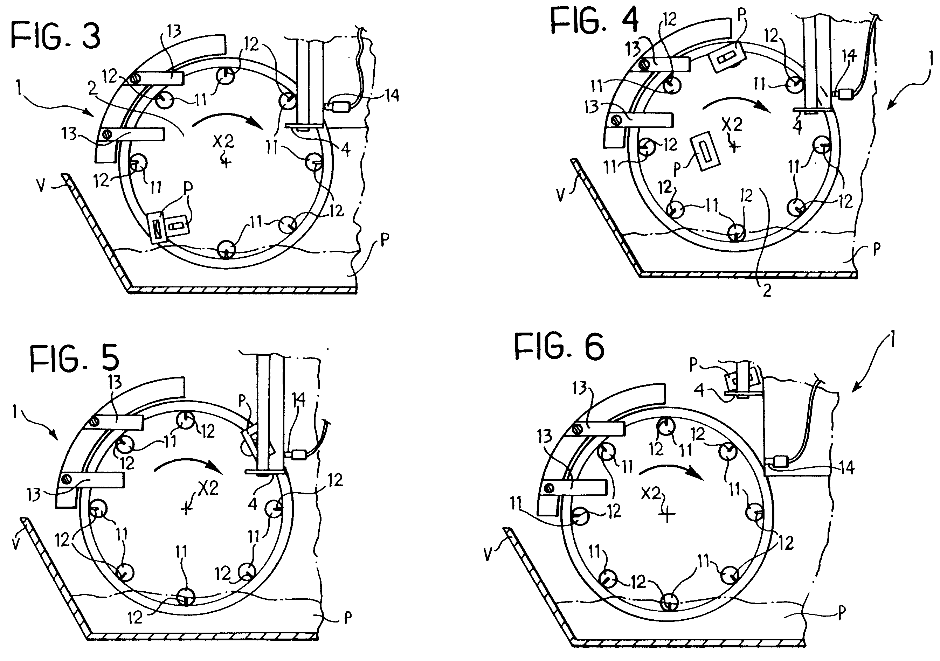

Those items P which are thus in front of the apertures 12 of the disc 2 at that time immersed in the vessel V are subjected to an attractive force (by vacuum). When the disc 2 rotates (respectively clockwise for the disc on the right and anti-clockwise for that on the left in Figure 1), this force makes one or more items P follow the disc 2 in its rotation and move upwards: see, for example, Figure 3 where the disc 2, rotating clockwise, has carried with it an item P lifting it away from the other items contained in the vessel V.

As a result of the gradual rotation, the items P which remain, so to speak, stuck to the periphery of the disc 2, pass by one or more deflector elements 13 constituted, for example, by high-quality steel blades, possibly having L-shaped or similar free ends and extending approximately radially relative to the disc 2 so as to interfere, at least marginally, with the orbit of the stoppers 11 about the axis X2.

The purpose of the deflector elements 13 is to ensure that only one of a group of items P held round the disc 2 is able to proceed to the rake 4 and to be fed on its own to the inlets C1, C2.

This result is achieved by the interference of the deflectors with the path of the items P transferred by the rotation of the disc: see, for example Figure 4 where one item P, finding itself travelling on the disc 2 in a path interfering with one of the deflector elements 13 falls back into the vessel V, while another item P picked up simultaneously from the vessel V, remains attached to the disc 2 and continues its movement about the axis X2 until it reaches the rake 4 (Figure 5).

A sensor 14 (for example an infrared or vacuum proximity sensor) positioned by the rake 4 signals that an item P has reached this angular position.

Once it has registered the presence of an item P to be withdrawn, the general control unit of the apparatus (to which the sensor 14 is connected by known means and in known manner) activates the actuator 5. The rake 4, which is formed and mounted to resemble a hay rake or, better, a croupier's rake and acts on the surface of the disc 2 at the angular position of the sensor 14, is urged upwards (see Figure 2 - unbroken line - and Figure 6) so as to carry the item P towards the inlets C1, C2 which are arranged either in the plane of movement of the rake 4 or, as in the embodiment illustrated, in a slide plane S which is perpendicular to the plane in which the rake 4 moves.

At this point, the movement of the selector 3 towards one or the other of the inlets C1, C2 causes the item P caught by the rake 4 to slide down the plane S and be fed into one or the other of the inlet openings. The item is prevented from becoming jammed, balanced on the edge of the opening C1, C2, by blades LC1, LC2 which oscillate owing to the vibration of the apparatus and push any items P which have stopped on the inner edge of the inlets C1, C2.

Once the item P has been transferred to the inlets C1, C2, the actuator 5 returns the rake 4 to the rest position shown in Figures 1, 2 (broken line) and 3 to 5.

At this point, the loading operation described above may be repeated in identical manner for another item P.

Usually, the sensor 14 and the general control unit of the apparatus are programmed to detect the failure in a given time interval to move at least one item P into the range of the rake 4 and to speed up the rotation of the disc 2 until it reaches its loading condition (one item P on the rake 4).

The stoppers 11 are replaceable in order to allow the structure, dimensions and shape of the apertures (here represented by slits 12) to be adapted to the characteristics of the items P to be picked up. For example, the slit 12 illustrated is excellently suited to picking up generally flat bodies, in the case of larger items, with a rounded shape (for example the bodies of small toy cars) it may be advantageous to use stoppers that are shaped differently at the surface of the disc 2, for example stoppers with an at least slightly concave surface, with air-inlet apertures distributed around the periphery of this concave surface.

Naturally, it is possible to use stoppers 11 with characteristics specifically adapted according to the requirements of use (dimensions and shape of the items P to be picked up).

In tests and in operating experience, the applicant was able to verify that the arrangement of the invention is highly reliable in use, as far as both the picking-up rate of the items P and the reliability of the selection operation are concerned (feeding only one item P at a time into the ducts C1, C2).

## Claims

1. An apparatus for picking up items (P) from a containment volume (V) and feeding them selectively to a loading station (C1, C2), including:
- a rotatable body (2) interposed in use between the containment volume (V) and the loading station (C1, C2), a portion of the periphery of said rotatable body (2) being arranged within the containment volume (V),
- at least one aperture (12) in the periphery of the rotatable body (2) such that, as a result of the rotation of the rotatable body (2), the at least one aperture (12) follows a path which includes at least a portion which passes through the containment volume (V),
- pump means (6 to 10) terminating at the at least one aperture (12) so as to establish, in use, an air-pressure gradient through the at least one aperture (12) in the direction which draws the items (P) onto the surface of the rotatable body (2), whereby the rotation of the rotatable body (2) causes the items (P) to be entrained by the rotatable body (2) from the containment volume (V), and
- transfer means (4) which act between the surface of the rotatable body (2) and the loading station (C1, C2) so as to transfer selectively towards the loading station (C1, C2) the items (P) picked up from the containment volume (V) and held on the surface of the rotatable body (2) by the pressure gradient,
characterised in that it includes at least one element (11) mounted on the rotatable body (2) so as to be selectively removable and to define said at least one aperture; the arrangement being such that it is possible to modify the shape of said at least one aperture (12) according to the characteristics of the items (P) to be picked up by replacing the element (11) with a similar; element having a different aperture.

2. An apparatus according to Claim 1, characterised in that deflector means (13) are associated with the rotatable body (2), and positioned so as to interfere at least marginally with the path of the at least one aperture (12) and, if any plurality items (P) are held at the at least one aperture (12) in the rotatable body (2), to cause said items (P) to fall except for a single item to be fed towards the transfer means (4).

3. An apparatus according to Claim 1 or Claim 2, characterised in that the suction means include a chamber (7) the mouth of which is substantially sealed (8) by the rotatable body (2); said chamber (7) leading from a subatmospheric pressure source (10).

4. An apparatus according to Claim 3, characterized in that the mouth of the chamber (7) has an associated sealing member (8) which forms said substantial seal between the rotatable body (2) and the chamber (7) itself.

5. An apparatus according to any one of the preceding Claims, characterised in that the rotatable body (2) has a plurality of said at least one aperture (12) around its periphery.

6. An apparatus according to any one of the preceding Claims, characterised in that the rotatable body (2) is a disc.

7. An apparatus according to any one of the preceding Claims, characterised in that the rotatable body (2) is mounted for rotation about its axis (X2) and is generally inclined to the vertical.

8. An apparatus according to Claim 7, characterised in that the axis (X2) is inclined at an angle of the order of 45° to the vertical.

9. An apparatus according to any one of the preceding Claims, characterised in that the transfer means (4) include at least one rake element (4) movable selectively between:
- a position which interferes with the path of the items (P) picked up from the containment volume (V) and held on the rotatable body (2), and
- a position close to the loading station (C1, C2).

10. An apparatus according to Claim 9, characterised in that the rake element (4) is fluid actuated (5).

11. An apparatus according to any one of Claims 1, 9 or 10, characterised in that it includes sensor means (14) for detecting the presence of items (P) held on the rotatable body (2) in the vicinity of the transfer means (4).

12. An apparatus according to any one of the preceding Claims, characterised in that the loading station includes a plurality of loading inlets (C1, C2) as well as selector means (3) which cooperate with the transfer means (4) to send the items (P) picked up by the transfer means (4) from the rotatable body towards a particular one of the loading inlets (C1, C2).

13. An apparatus according to any one of the preceding Claims, combined with an apparatus (1) which is structurally identical in a station for picking up items (P) with structurally-identical apparata (1) operating in a common containment volume (V) to pick up the items (P).

14. A method for picking up items (P) from a containment volume (V) and feeding them selectively to a loading station (C1, C2), including the steps of:
- interposing a rotatable body (2) between the containment volume (V) and the loading station (C1, C2) with a peripheral portion of the rotatable body (2) arranged in the containment volume (V).
- providing on the periphery of the rotatable body (2) at least one aperture (12) whereby as a result of the rotation of the rotatable body (2) the at least one aperture (12) follows a path which includes at least one portion passing through the containment volume (V).
- establishing through the at least one aperture (12) an air-pressure gradient acting to draw the items (P) onto the surface of the rotatable body (2) whereby the rotation of the rotatable body (2) causes the items (P) to be entrained by the rotatable body (2) from the containment volume (V), and
- selectively transferring the items (P) picked up from the containment volume (V), and held on the surface of the rotatable body (2) by the pressure gradient, from the surface of the rotatable body (2) towards the loading station (C1, C2),
characterised in that it includes the step of mounting at least one selectively removable element (11) on the rotatable body (2) to define the at least one aperture; the arrangement being such that it is possible to modify the shape of said at least one aperture (12), according to the requirements of the items (P) to be picked up, by replacing the element (11) with a similar element with a different aperture.

15. A method according to Claim 14, characterised in that it includes the step of arranging deflector means (13) to interfere at least marginally with the path of the at least one aperture (12) so that, if any plurality of items (P) are held at the at least one aperture (12) of the rotatable body (2), said items (P) fall, except for a single item (P) to be fed towards the transfer means (4).

16. A method according to Claim 14 or Claim 15, characterised in that it includes the step of associating with the at least one aperture (12) suction means which include a chamber (7) the mouth of which is substantially sealed (8) by the rotatable body (2) and a source of subatmospheric pressure (10) leading to the chamber (7).

17. A method according to Claim 16, characterised in that it includes the step of associating with the mouth of the chamber (7) a sealing member (8) which provides said substantial seal between the rotatable body (2) and the chamber (7).

18. A method according to any one of the preceding Claims 14 to 17, characterised in that it includes the step of providing a plurality of said at least one aperture (12) round the periphery of the rotatable body (2).

19. A method according to any one of the preceding Claims 14 to 18, characterised in that the rotatable body (2) is made as a disc.

20. A method according to any one of the preceding Claims 14 to 19, characterised in that it includes the step of mounting the rotatable body (2) for rotation about an axis (X2), generally inclined to the vertical.

21. A method according to Claim 20, characterised in that the respective axis (X2) is inclined at an angle of the order of 45° to the vertical.

22. A method according to any one of the preceding Claims 14 to 21, characterised in that it includes the step of providing at least one rake transfer element (4) and moving the rake (4) selectively between:
- a position in which it interferes with the path of the items (P) picked up from the containment volume (V) and held on the rotatable body (2), and
- a position close to the loading station (C1, C2).

23. A method according to Claim 22, characterised in that it includes the step of associating fluid actuator means (5) with the rake element (4).

24. A method according to any one of Claims 14, 22 or 23, characterised in that it includes the step of detecting (14) the presence of items (P) held on the rotatable body (2) in the vicinity of the transfer means (4).

25. A method according to any one of the preceding Claims 14 to 24, characterised in that a plurality of loading inlets (C1, C2) are provided at the loading station and in that it includes the step of selectively directing (3) the items (P) withdrawn from the rotatable body (2) by the transfer means (4) towards a respective loading inlet (C1, C2).

## Patentansprüche

1. Vorrichtung zur Entnahme von Teilen (P) aus einem Aufnahmeraum (V) und zu deren selektiver Zuführung zu einer Beschickungsstation (C1, C2), mit
- einem Drehkörper (2), der im Betrieb zwischen dem Aufnahmeraum (V) und der Beschickungsstation (C1, C2) mit einem Teil seines Umfangs in dem Aufnahmeraum (V) angeordnet ist,
- mindestens einer Öffnung (12) auf dem Umfang des Drehkörpers (2), so daß infolge der Drehbewegung des Drehkörpers (2) die mindestens eine Öffnung (12) eine Bahn beschreibt, die mindestens einen den Aufnahmeraum (V) durchlaufenden Abschnitt umfaßt,
- Pumpeinrichtungen (6 bis 10), die an der mindestens einen Öffnung (12) enden, um im Betrieb durch die mindestens eine Öffnung (12) einen Druckgradienten des Luftstroms aufzubauen, der in der Richtung wirksam ist, in der die Teile (P) auf die Oberfläche des Drehkörpers (2) gezogen werden, so daß die Drehung des Drehkörpers (2) bewirkt, daß die Teile (P) aus dem Aufnahmeraum (V) durch den Drehkörper (2) mitgenommen werden, und
- Übertragungseinrichtungen (4), die zwischen der Oberfläche des Drehkörpers (2) und der Beschickungsstation (C1, C2) in der Weise wirksam sind, daß die aus dem Aufnahmeraum (V) entnommenen und auf der Oberfläche des Drehkörpers (2) durch den Druckgradienten gehaltenen Teile (P) selektiv zu der Beschickungsstation (C1, C2) übertragen werden,
dadurch **gekennzeichnet**, daß
sie mindestens ein Element (11) aufweist, das selektiv entfernbar auf dem Drehkörper (2) angebracht ist und die mindestens eine Öffnung definiert, wobei die Anordnung in der Weise vorgesehen ist, daß durch Austausch des Elements (11) gegen ein anderes ähnliches Element, das eine andere Öffnung aufweist, die Form der mindestens einen Öffnung (12) entsprechend den Merkmalen der zu entnehmenden Teile (P) veränderbar ist.

2. Vorrichtung nach Anspruch 1,
dadurch **gekennzeichnet,** daß
dem Drehkörper (2) Ablenkeinrichtungen (13) zugeordnet sind, die in einer Position angeordnet sind, in der sie zumindest am Rand die von der mindestens einen Öffnung (12) beschriebene Bahn so beeinflussen, daß sie bei Anwesenheit von mehreren von der mindestens einen Öffnung (12) des Drehkörpers (2) mitgeführten Teilen (P) das Zurückfallen der Teile (P) bewirken, mit Ausnahme eines einzigen Teils, welches zu den Übertragungseinrichtungen (4) zuzuführen ist.

3. Vorrichtung nach Anspruch 1 oder 2,
dadurch **gekennzeichnet,** daß
die Saugeinrichtungen einen Hohlraum (7) aufweisen, dessen Öffnungsbereich der Drehkörper (2) im wesentlichen dicht (8) abschließt wobei der Hohlraum (7) das Ende einer Unterdruckquelle (10) darstellt.

4. Vorrichtung nach Anspruch 3,
dadurch **gekennzeichnet,** daß
dem Öffnungsbereich des Hohlraums (7) eine Dichtung (8) zugeordnet ist, die die wesentliche Abdichtung zwischen dem Drehkörper (2) und dem Hohlraum (7) selbst gewährleistet.

5. Vorrichtung nach einem der vorhergehenden Ansprüche,
dadurch **gekennzeichnet,** daß
der Drehkörper (2) entlang seines Umfangs mehrere der mindestens einen Öffnung (12) aufweist.

6. Vorrichtung nach einem der vorhergehenden Ansprüche,
dadurch **gekennzeichnet,** daß
der Drehkörper (2) eine Scheibe ist.

7. Vorrichtung nach einem der vorhergehenden Ansprüche,
dadurch **gekennzeichnet,** daß
der Drehkörper (2) um seine Achse (X2) drehbar angebracht ist und im allgemeinen bezüglich der Vertikalen geneigt ist.

8. Vorrichtung nach Anspruch 7,
dadurch **gekennzeichnet,** daß
die Achse (X2) bezüglich der Vertikalen um einen Winkel in der Größenordnung von 45° geneigt ist.

9. Vorrichtung nach einem der vorhergehenden Ansprüche,
dadurch **gekennzeichnet,** daß
die Übertragungseinrichtungen (4) wenigstens ein Rakelelement (4) aufweisen, das wahlweise zwischen folgenden Stellungen bewegbar ist:
- einer Stellung, welche die Bahn der aus dem Aufnahmeraum (V) aufgenommenen und an dem Drehkörper (2) gehaltenen Teile (P) beeinflußt und
- einer Stellung, die nahe bei der Beschickungsstation (C1, C2) ist.

10. Vorrichtung nach Anspruch 9,
dadurch **gekennzeichnet,** daß
das Rakelelement (4) fluidbetätigt (5) ist.

11. Vorrichtung nach einem der Ansprüche 1, 9 oder 10,
dadurch **gekennzeichnet,** daß
diese Sensoreinrichtungen (14) zum Erfassen der Anwesenheit von Teilen (P), die an dem Drehkörper (2) gehalten werden, in der Umgebung der Übertragungseinrichtungen (4) aufweist.

12. Vorrichtung nach einem der vorhergehenden Ansprüche,
dadurch **gekennzeichnet,** daß
die Beschickungsstation eine Vielzahl von Beschickungsöffnungen (C1, C2) sowie Abweiseinrichtungen (3) aufweist, welche mit den Übertragungseinrichtungen (4) in der Weise zusammenwirken, daß die von der Übertragungseinrichtung (4) von dem Drehkörper abgenommenen Teile (P) zu jeweils einer der Beschickungsöffnungen (C1, C2) geleitet werden.

13. Vorrichtung nach einem der vorhergehenden Ansprüche,
welche mit einer vom Aufbau her identischen Vorrichtung (1) in einer Entnahmestation für die Teile (P) gekoppelt ist, wobei die vom Aufbau her identischen Vorrichtungen (1) im Innenraum eines gemeinsamen Aufnahmeraumes (V) zum Aufnehmen der Teile (P) wirksam sind.

14. Verfahren zur Entnahme von Teilen (P), die sich in einem Aufnahmeraum (V) befinden, und zu deren selektiver Zuführung zu einer Beschickungsstation (C1, C2), mit folgenden Schritten:
- Anordnen eines Drehkörpers (2) zwischen dem Aufnahmeraum (V) und der Beschickungsstation (C1, C2), wobei ein Umfangsabschnitt des Drehkörpers (2) in dem Aufnahmeraum (V) angeordnet ist.
- Vorsehen wenigstens einer Öffnung (12) an dem Umfang des Drehkörpers (2), wodurch als Ergebnis der Drehung des Drehkörpers (2) die wenigstens eine Öffnung (12) einer Bahn folgt, die wenigstens einen Abschnitt aufweist, der durch den Aufnahmeraum (V) verläuft.
- Aufbauen eines Luftdruckgradienten durch die wenigstens eine Öffnung (12), der derart wirkt, daß die Teile (P) an die Oberfläche des Drehkörpers (2) gezogen werden, wodurch die Drehung des Drehkörpers (2) dazu führt, daß die Teile (P) aus dem Aufnahmeraum (V) durch den Drehkörper (2) mitgenommen werden, und
- selektives Übertragen der aus dem Aufnahmeraum (V) aufgenommenen und an der Oberfläche des Drehkörpers (2) durch den Druckgradienten gehaltenen Teile (P) von der Oberfläche des Drehkörpers (2) in Richtung der Beschickungsstation (C1, C2),
dadurch **gekennzeichnet,** daß
ferner der folgende Schritt durchgeführt wird: Anbringen wenigstens eines selektiv entfernbaren Elements (11) an dem Drehkörper (2) zum Festlegen der wenigstens einen Öffnung; wobei die Anordnung derart ausgeführt ist, daß es möglich ist, die Form der wenigstens einen Öffnung (12) gemäß den Anforderungen der aufzunehmenden Teile (P) durch ein Ersetzen des Elements (11) durch ein ähnliches Element mit einer unterschiedlichen Öffnung zu verändern.

15. Verfahren nach Anspruch 14,
dadurch **gekennzeichnet,** daß
Ablenkeinrichtungen (13) angeordnet werden, die wenigstens am Rand die Bahn der wenigstens einen Öffnung (12) derart beeinflussen, daß, wenn mehrere Teile (P) an der wenigstens einen Öffnung (12) des Drehkörpers (2) gehalten werden, die Teile (P) mit Ausnahme eines einzigen Teils (P), das der Übertragungseinrichtung (4) zugeführt werden soll, herabfallen.

16. Verfahren nach Anspruch 14 oder 15,
dadurch **gekennzeichnet,** daß
der wenigstens einen Öffnung (12) Saugeinrichtungen zugeordnet werden, die einen Hohlraum (7) aufweisen, dessen Öffnungsbereich der Drehkörper (2) im wesentlichen abdichtet (8), wobei eine Unterdruckquelle (10) zu dem Hohlraum (7) führt.

17. Verfahren nach Anspruch 16,
dadurch **gekennzeichnet,** daß
dem Öffnungsbereich des Hohlraums (7) ein Dichtelement (8) zugeordnet wird, das für die wesentliche Abdichtung zwischen dem Drehkörper (2) und dem Hohlraum (7) sorgt.

18. Verfahren nach einem der Ansprüche 14 bis 17,
dadurch **gekennzeichnet,** daß
mehrere der wenigstens einen Öffnung (12) um den Umfang des Drehkörpers (2) vorgesehen werden.

19. Verfahren nach einem der Ansprüche 14 bis 18,
dadurch **gekennzeichnet,** daß
der Drehkörper (2) eine Scheibe ist.

20. Verfahren nach einem der Ansprüche 14 bis 19,
dadurch **gekennzeichnet,** daß
der Drehkörper (2) für eine Drehung um eine Achse (X2) im allgemeinen gegenüber der Vertikalen geneigt angebracht wird.

21. Verfahren nach Anspruch 20,
dadurch **gekennzeichnet,** daß
die jeweilige Achse (X2) bezüglich der Vertikalen um einen Winkel in der Größenordnung von 45° geneigt ist.

22. Verfahren nach einem der Ansprüche 14 bis 21,
dadurch **gekennzeichnet,** daß
wenigstens ein Rakelübertragungselement (4) vorgesehen wird, und das Rakelelement (4) wahlweise zwischen folgenden Stellungen bewegt wird:
- einer Stellung, welche die Bahn der aus dem Aufnahmeraum (V) aufgenommenen und an dem Drehkörper (2) gehaltenen Teile (P) beeinflußt und
- einer Stellung, die nahe bei der Beschickungsstation (C1, C2) ist.

23. Verfahren nach Anspruch 22,
dadurch **gekennzeichnet,** daß
dem Rakelelement (4) Fluidbetätigungseinrichtungen (5) zugeordnet werden.

24. Verfahren nach einem der Ansprüche 14, 22 oder 23,
dadurch **gekennzeichnet,** daß
die Anwesenheit von Teilen (P), die an dem Drehkörper (2) gehalten werden, in der Umgebung der Übertragungseinrichtungen (4) erfaßt (14) wird.

25. Verfahren nach einem der vorhergehenden Ansprüche 14 bis 24,
dadurch **gekennzeichnet,** daß
mehrere Beschickungsöffnungen (C1, C2) an der Beschickungsstation vorgesehen werden, und daß die Teile (P), die durch die Übertragungseinrichtungen (4) von dem Drehkörper (2) gezogen werden, in Richtung einer jeweiligen Beschickungsöffnung (C1, C2) geleitet (3) werden.

## Revendications

1. Appareil pour prélever des articles (P) d'un volume de confinement (V) et les distribuer sélectivement à un poste de chargement (C1, C2), comprenant :
- un corps rotatif (2) disposé, à l'utilisation, entre le volume de confinement (V) et le poste de chargement (C1, C2), une portion de la périphérie dudit corps rotatif (2) étant agencée au sein du volume de confinement (V),
- au moins une ouverture (12) dans la périphérie du corps rotatif (2) de manière que, en conséquence de la rotation du corps rotatif (2), ladite au moins une ouverture (12) suive une trajectoire qui comprend au moins une partie qui traverse le volume de confinement (V),
- un moyen de pompe (6 à 10) se terminant à ladite au moins une ouverture (12) de manière à créer, à l'utilisation, un gradient de pression d'air dans ladite au moins une ouverture (12) dans la direction qui aspire les articles (P) sur la surface du corps rotatif (2), de manière que la rotation du corps rotatif (2) amène les articles (P) à être entraînés par le corps rotatif (2) depuis le volume de confinement (V), et
- un moyen de transfert (4) qui agit entre la surface du corps rotatif (2) et le poste de chargement (C1, C2) afin de transférer sélectivement vers le poste de chargement (C1, C2) les articles (P) prélevés du volume de confinement (V) et maintenus sur la surface du corps rotatif (2) par le gradient de pression,
caractérisé en ce qu'il comprend au moins un élément (11) monté sur le corps rotatif (2) afin d'être amovible sélectivement et de définir ladite au moins une ouverture; l'agencement étant tel qu'il est possible de modifier la forme de ladite au moins une ouverture (12) en fonction des caractéristiques des articles (P) à prélever en remplaçant l'élément (11) par un élément similaire comportant une ouverture différente.

2. Appareil selon la revendication 1, caractérisé en ce que des moyens de déviation (13) sont associés au corps rotatif (2), et positionnés de manière à entraver au moins marginalement la trajectoire de ladite au moins une ouverture (12) et, si une pluralité quelconque d'articles (P) est maintenue à ladite au moins une ouverture (12) dans le corps rotatif (2), amener lesdits articles (P) à tomber, à l'exception d'un article unique devant être distribué vers le moyen de transfert (4).

3. Appareil selon la revendication 1 ou la revendication 2, caractérisé en ce que le moyen d'aspiration comprend une chambre (7) dont l'ouverture est sensiblement hermétiquement obturée (8) par le corps rotatif (2); ladite chambre (7) partant d'une source de pression sous-atmosphérique (10).

4. Appareil selon la revendication 3, caractérisé en ce que l'ouverture de la chambre (7) comporte un organe d'étanchéité associé (8) qui forme ledit joint substantiel entre le corps rotatif (2) et la chambre (7) même.

5. Appareil selon l'une quelconque des revendications précédentes, caractérisé en ce que le corps rotatif (2) comporte une pluralité de ladite au moins une ouverture (12) sur sa périphérie.

6. Appareil selon l'une quelconque des revendications précédentes, caractérisé en ce que le corps rotatif (2) est un disque.

7. Appareil selon l'une quelconque des revendications précédentes, caractérisé en ce que le corps rotatif (2) est monté pour rotation autour de son axe (X2) et est généralement incliné par rapport à la verticale.

8. Appareil selon la revendication 7, caractérisé en ce que l'axe (X2) est incliné à un angle de l'ordre de 45° par rapport à la verticale.

9. Appareil selon l'une quelconque des revendications précédentes, caractérisé en ce que le moyen de transfert (4) comprend au moins un râteau (4) mobile sélectivement entre :
- une position qui entrave la trajectoire des articles (P) prélevés du volume de confinement (V) et maintenus sur le corps rotatif (2), et
- une position proche du poste de chargement (C1, C2).

10. Appareil selon la revendication 9, caractérisé en ce que le râteau (4) est actionné par fluide (5).

11. Appareil selon l'une quelconque des revendications 1, 9 ou 10, caractérisé en ce qu'il comprend un moyen de détection (14) pour détecter la présence d'articles (P) maintenus sur le corps rotatif (2) au voisinage du moyen de transfert (4).

12. Appareil selon l'une quelconque des revendications précédentes, caractérisé en ce que le poste de chargement comprend une pluralité d'entrées de chargement (C1, C2) ainsi qu'un moyen de sélection (3) qui coopère avec le moyen de transfert (4) pour envoyer les articles (P) prélevés par le moyen de transfert (4) du corps rotatif vers une des entrées de chargement (C1, C2) particulière.

13. Appareil selon l'une quelconque des revendications précédentes, combiné avec un appareil (1) qui est de structure identique dans un poste pour prélever des articles (P) avec des appareils de structure identique (1) opérant dans un volume de confinement (V) commun pour prélever les articles (P).

14. Procédé pour prélever des articles (P) d'un volume de confinement (V) et les distribuer sélectivement à un poste de chargement (C1, C2), comprenant les phases consistant à :
- disposer un corps rotatif (2) entre le volume de confinement (V) et le poste de chargement (C1, C2) avec une portion périphérique du corps rotatif (2) agencée dans le volume de confinement (V),
- prévoir sur la périphérie du corps rotatif (2) au moins une ouverture (12) de manière que, en conséquence de la rotation du corps rotatif (2), ladite au moins une ouverture (12) suive une trajectoire qui comprend au moins une partie traversant le volume de confinement (V),
- créer, dans ladite au moins une ouverture (12), un gradient de pression d'air servant à aspirer les articles (P) sur la surface du corps rotatif (2), de manière que la rotation du corps rotatif (2) amène les articles (P) à être entraînés par le corps rotatif (2) depuis le volume de confinement (V), et
- transférer sélectivement les articles (P) prélevés du volume de confinement (V), et maintenus sur la surface du corps rotatif (2) par le gradient de pression, de la surface du corps rotatif (2) vers le poste de chargement (C1, C2),
caractérisé en ce qu'il comprend la phase consistant à monter au moins un élément (11) amovible sélectivement sur le corps rotatif (2) afin de définir ladite au moins une ouverture; l'agencement étant tel qu'il est possible de modifier la forme de ladite au moins une ouverture (12) en fonction des caractéristiques des articles (P) à prélever, en remplaçant l'élément (11) par un élément similaire avec une ouverture différente.

15. Procédé selon la revendication 14, caractérisé en ce qu'il comprend la phase consistant à disposer des moyens de déviation (13) pour entraver au moins marginalement la trajectoire de ladite au moins une ouverture (12) de manière que, si une pluralité quelconque d'articles (P) est maintenue à ladite au moins une ouverture (12) du corps rotatif (2), lesdits articles (P) tombent, à l'exception d'un article unique (P) devant être distribué vers le moyen de transfert (4).

16. Procédé selon la revendication 14 ou la revendication 15, caractérisé en ce qu'il comprend la phase consistant à associer à ladite au moins une ouverture (12) un moyen d'aspiration qui comprend une chambre (7) dont l'ouverture est sensiblement hermétiquement obturée (8) par le corps rotatif (2) et une source de pression négative (10) menant à la chambre (7).

17. Procédé selon la revendication 16, caractérisé en ce qu'il comprend la phase consistant à associer à l'ouverture de la chambre (7) un organe d'étanchéité (8) qui forme ledit joint substantiel entre le corps rotatif (2) et la chambre (7).

18. Procédé selon l'une quelconque des revendications précédentes 14 à 17, caractérisé en ce qu'il comprend la phase consistant à disposer une pluralité de ladite au moins une ouverture (12) sur la périphérie du corps rotatif (2).

19. Procédé selon l'une quelconque des revendications précédentes 14 à 18, caractérisé en ce que le corps rotatif (2) est un disque.

20. Procédé selon l'une quelconque des revendications précédentes 14 à 19, caractérisé en ce qu'il comprend la phase consistant à monter le corps rotatif (2) pour rotation autour d'un axe (X2), généralement incliné par rapport à la verticale.

21. Procédé selon la revendication 20, caractérisé en ce que l'axe respectif (X2) est incliné à un angle de l'ordre de 45° par rapport à la verticale.

22. Procédé selon l'une quelconque des revendications précédentes 14 à 21, caractérisé en ce qu'il comprend la phase consistant à prévoir au moins un râteau de transfert (4) et déplacer le râteau (4) sélectivement entre :
- une position dans laquelle il entrave la trajectoire des articles (P) prélevés du volume de confinement (V) et maintenus sur le corps rotatif (2), et
- une position proche du poste de chargement (C1, C2).

23. Procédé selon la revendication 22, caractérisé en ce qu'il comprend la phase consistant à associer un moyen d'actionnement à fluide (5) au râteau (4).

24. Procédé selon l'une quelconque des revendications 14, 22 ou 23, caractérisé en ce qu'il comprend la phase consistant à détecter (14) la présence d'articles (P) maintenus sur le corps rotatif (2) au voisinage du moyen de transfert (4).

25. Procédé selon l'une quelconque des revendications précédentes 14 à 24, caractérisé en ce qu'une pluralité d'entrées de chargement (C1, C2) est prévue au poste de chargement et en ce qu'il comprend la phase consistant à diriger sélectivement (3) les articles (P) prélevés du corps rotatif (2) par le moyen de transfert (4) vers une entrée de chargement respective (C1, C2).
